# EUROPEAN PATENT SPECIFICATION

(11) **EP 3 604 195 B1**
(45) Date of publication and mention of the grant of the patent: **19.07.2023**
(21) Application number: 18187179.9
(22) Date of filing: 03.08.2018
(51) Int. Cl.: B66B 5/00, G05B 23/02, G10L 25/51

(54) **METHOD, SYSTEM AND COMPUTER PROGRAM PRODUCT FOR PREDICTING FAILURE OF A NOISE-EMITTING APPARATUS**
VERFAHREN, SYSTEM UND COMPUTERPROGRAMMPRODUKT ZUR VORHERSAGE DES AUSFALLS EINER GERÄUSCHEMITTIERENDEN VORRICHTUNG
PROCÉDÉ, SYSTÈME ET PRODUIT-PROGRAMME D'ORDINATEUR PERMETTANT DE PRÉVOIR UNE DÉFAILLANCE D'UN APPAREIL ÉMETTANT DU BRUIT

(43) Date of publication of application: 05.02.2020
(73) Proprietor: Curious Technology GmbH, 10115 Berlin (DE)
(72) Inventor: MUKAI, Ikumasa, Saitama-ken 343-0833 (JP); NAKANO, Takeshi, 10115 Berlin (DE)
(74) Representative: PATERIS Patentanwälte PartmbB

(56) References cited:
- WO-A1-2014/200457
- WO-A1-2015/053774
- US-A1- 2014 244 552

## Description

### Field

The present disclosure in general relates to automated prediction of system behavior. More particularly, the present disclosure relates to a method for predicting failure of a noise-emitting apparatus, wherein the term "failure" of a noise-emitting apparatus comprises any form of error, malfunction or other unintended operation or interruption of operation that is detectable by evaluating audio sensor signals received from the apparatus or system, device, machine, engine etc. It also relates to a corresponding system for predicting failure of a noise-emitting apparatus, and to a computer program product.

### Background

Depending on an intended usage or field of application, operability of a machine or other mechanical or electrical apparatus may be crucial for providing a service to a user anytime or on demand or may be required for a an uninterrupted production process. Any failure of an apparatus may be accompanied, e.g., by service interruption, additional costs for maintenance or repair, and lost productivity, and may even be a safety or security risk, depending on the field of application of the apparatus.

For example, operability of an escalator or an elevator may be vital, e.g., in multistory buildings, and the time of unavailability of the service is a decisive factor. Therefore, maintenance time should be short and effective. This can be achieved by carrying out the maintenance at a suitable time of day and before the apparatus becomes too damaged for continuing provision of service.

For example, in KR20180010634A, a system for prognosticating failure of an elevator is described, wherein malfunction and abnormal behavior of an elevator is detected in advance by collectively sensing multiple measurement signals measured by multiple sensors located at different positions, and evaluating the sensed signals over time using a deep learning neuronal network to generate a malfunction prediction model. If a failure probability of a specific part of the system indicates a high probability of a failure, the user is notified and can prepare accordingly.

However, besides the required processing power, the installation and maintenance load of such a system handling many different sensors at different locations, and requiring careful calibration and handling in order to have the deep learning approach deliver meaningful results is considerable. Furthermore, the system provides a probability of failure instead of an actual time remaining before the failure will presumably occur.

In WO 2015053774 A1, a system for predicting events by associating time series data with other types of non-time series data is presented. In order to predict the future behavior of a system, in particular to predict failure events of the system, sensor signals received from the system are analyzed and models generated which allow to recognize currently received sensor data as potentially preceding a future failure event based on historic or artificially generated failure events.

In WO 2014200457 A1, a system for elevator noise monitoring is described. Elevator components and systems are analyzed by recording elevator sounds at different times and analyzing the different recordings of the elevator sounds to determine changes in the elevator sound over time. Accordingly, component or system failures may be reduced or eliminated in the elevator by performing preventative maintenance based on the calculated rate of change of elevator sounds and calculated failure times of the components or systems.

In US 2014244552 A1, a global model for failure prediction for artificial lift systems disposed across a plurality of different oil fields is described. It includes extracting one or more features from a dataset including time sampled performance of a plurality of artificial lift systems disposed across a plurality of different oil fields, wherein the dataset includes data from failed and normally operating artificial lift systems.

### Summary

It is an objective of the present invention to provide an inexpensive possibility for more robust and precise prediction of a remaining time to failure of machines, devices and other apparatus, e.g. an elevator, an escalator, an engine or machine in a car, a train, an airplane, a factory, a system for surgical or other healthcare treatment, or for usage in household etc., using only a few signals that can easily be acquired.

This objective is solved by a method for predicting failure of a noise-emitting apparatus as stated in claim 1. A corresponding system for predicting failure of a noise-emitting apparatus and a computer program product are disclosed in claims 16 and 17, respectively. Advantageous additional embodiments of the invention are disclosed in the respective dependent claims.

According to an aspect of the invention, a method for predicting failure of a noise-emitting apparatus is provided. It comprises receiving noise signals from a noise-emitting apparatus during consecutive periods of time, and for each of the consecutive periods of time, extracting from the received noise signals noise sections with respect to noise events contained in said noise sections, and corresponding to detectable activity within the corresponding noise signal.

Further, the method comprises generating section clusters of noise sections belonging to a first period of time depending on a similarity measure between the noise sections, and assigning a corresponding section cluster timestamp; and for each subsequent period of time, i.e. each subsequent period of time of said consecutive periods of time, at least rebuilding said section clusters, wherein noise sections belonging to the subsequent period of time are assigned depending on the similarity measure to the section clusters or newly generated section clusters, and assigning a subsequent corresponding section cluster timestamp, to generate sequences of connected section clusters.

Further, after occurrence of a failure of the noise-emitting apparatus, at least a failure timestamp is assigned to the sequence of connected section clusters that comprises at least the section cluster having assigned the last noise section prior to said failure.

Furthermore, the method comprises receiving query noise signals from the noise-emitting apparatus, extracting a query noise section from the query noise signals and assigning the query noise section to a most similar query section cluster of the section clusters with respect to the similarity measure, and predicting a remaining time to failure depending at least on a comparison between the corresponding section cluster timestamp of said most similar query section cluster and the failure timestamp assigned to the sequence of connected section clusters said most similar query section cluster belongs to. A noise-emitting apparatus is an apparatus that, intentionally or unintentionally, emits noise that is at least partly and/or from time to time related to the current status of the apparatus. The term "noise" here comprises any audible (and in some embodiments also ultrasonic) sound emitted from any part of the apparatus and which is subject to change when operation conditions for the apparatus change, slowly or rapidly. An apparatus may be, for example, an elevator. However, any other noise-emitting apparatus, such as a dish washer, a computer, a car, an industrial robot, an airplane turbine, or a motor-driven surgical instrument, just to name a few, is a noise-emitting apparatus according to the invention.

Receiving a noise signal refers to making the noise signal available for processing, including at least temporarily storing the received or recorded noise signal, and, therefore, refers to receiving the noise signal using a microphone or other electro-acoustic converter as well as to making the already converted noise signal available via an interface for further processing. As the processing may be carried out by a computer or other programmable apparatus, the method may be a computer implemented method.

The duration of each of the consecutive periods of time may vary, but may usually be chosen to be constant. The duration of a period of time may be chosen depending on the field of application of the apparatus and the frequency of failure events. For example, in order to acquire and evaluate data for failure events of an elevator, the duration of a period of time may be chosen to be one week or month or longer or shorter. Other periods of time may be chosen, depending on the various fields of application.

A noise section is a short piece or subset of the received noise signals selected according to a detectable activity within the corresponding noise signal. The noise event may be detected using signal processing techniques, or may be detected externally and provided as metadata. For example, for an elevator, noise sections may be easily determined depending on the events of opening and closing of elevator doors, etc.

Assigning a noise section to a noise cluster refers to deciding based on the similarity measure used for clustering, that a noise section best fits to a certain section cluster. The number of noise sections may be counted, thereby providing an information of a regularity or irregularity of a newly assigned noise section. However, not all assigned noise sections may be added or appended to the noise cluster. For example, only a certain amount of best fitting noise sections with respect to the similarity measure may be added, or identical noise sections may be removed.

The generation of sequences of connected section clusters comprises saving the clusters to a memory, together with a cluster sequence identifier, and each cluster with a timestamp, i.e. an identifier at least identifying the relationship between clusters with respect to time.

Query noise signals are the noise signals received from the noise-emitting apparatus, but evaluated not predominantly for training a system for predicting failure of a noise-emitting apparatus, but evaluated for prediction of the remaining time to failure using the trained system.

A query noise section may not refer to a "historic" noise section but may refer to a current or recently received noise section, e.g. acquired in a real time processing, whereas other, "historic" noise sections may have been acquired earlier, e.g. during a preceding training phase. A query noise section may, therefore, be used to query the determined sequences of connected section clusters for predicting the remaining time to failure.

It should be noted that the assigning of a noise section to a section cluster depending on a similarity measure also includes not assigning said noise section, if it does not fit to section cluster. Noise sections not assigned to any section cluster may be collected, e.g. in an "unknown" class, and may be tried to be assigned to a new or existing cluster with a subsequent cluster rebuild.

The disclosed method for predicting failure of a noise-emitting apparatus is based on the idea that, in order to anticipate when a failure event will occur, received recorded data is examined to find signs in the form of sequences of noise sections which might precede the failure event. The method comprises determining sequences of connected section clusters over a longer period of time during a training phase, wherein after an occurrence of a failure the section cluster sequence, i.e. the sequence of connected section clusters, preceding the failure gets assigned the failure, thereby identifying said section cluster sequence as a model for sequences of noise sections and their timely order preceding the failure. With these auto-generated models for sequences of noise sections leading to a failure event, where irrelevant noise of known noise sections (i.e. audio data samples that comprise a detected noise or audio event) not assigned to the relevant section clusters, is left out, classifiers can be identified, which assign a noise section extracted from newly received noise signals from the known noise source accurately to one of the section clusters of the model.

The method further comprises testing query noise sections, i.e. recently or currently received noise sections against the failure history models, i.e. the auto-generated models for sequences of noise sections, e.g. using identified classifiers. For example, if the query noise section fits to a section cluster, i.e. the "query section cluster", the position of the section cluster within the corresponding sequence of connected section clusters identifies the presumably remaining time until the failure will occur, i.e. a remaining usefulness lifetime, whereas the cluster sequence identifier identifies the expected future failure, thereby allowing to apply maintenance counter measures at any suitable time within the remaining time to failure. The solution according to the aspect of the invention relies on easy to record emitted noise received from the apparatus under surveillance and is able to provide a prediction for the remaining time to failure at least in a resolution of multiples of the duration of the consecutive periods of time used for clustering. In another embodiment, multiple query noise sections may be assigned to sequences of query section clusters and, in order to predict a remaining time to failure, sequences of query section clusters are compared with the sequences of connected section clusters.

The training phase of determining failure history models can, but does not need to end before query noise sections are tested. In an embodiment, the training of section clusters and, thereby, improvement of models, is continued with each newly received noise section, i.e. with each new query noise section.

In an embodiment of the method, the generated and rebuilt section clusters are stored or saved associated with the corresponding section cluster timestamps and an identifier corresponding to the sequence of connected section clusters the stored section cluster belongs to. In order to provide the so far determined sequences of connected section clusters during a next rebuild of the clusters, the sequences of connected section clusters are saved, having their cluster sequence identifier and each cluster having its timestamp associated, for example as part of a name or label or other metadata.

In one embodiment, after the occurrence of a failure of the noise-emitting apparatus, additionally a failure type identifier identifying a corresponding type of the failure is assigned to the sequence of connected section clusters that comprises at least the section cluster having assigned the last noise section prior to said failure. The failure type identifier either may be stored additionally or may be saved as the corresponding new cluster sequence identifier. With this additional information, the method is able to deliver not only the remaining time until a failure will occur, but also to identify the expected type of failure.

In a preferred embodiment of the method for predicting failure of a noise-emitting apparatus, receiving the noise signals comprises transforming the noise signals to a frequency spectrum domain, and extracting the noise sections from the noise signals comprises extracting spectrum tiles from a three-dimensional noise spectrum representation of said noise signals. A spectrum tile is a noise section, if the received noise signal is transformed or converted to a frequency spectrum domain. Fast transform algorithms for performing, e.g., a Fourier transform or a Cosine transform are available. This allows to easily convert the processing of noise and sound to a robust processing of spectrum tiles that can be treated as "image representations" of the noise sections, thereby allowing to apply image processing techniques.

In an example embodiment of the method, the extracting of spectrum tiles comprises filtering the spectrum tiles depending on one or more other spectrum tiles. For example, the spectrum tile representing the quietest of the received noise sections belonging to a same period of time may very likely not be a good indication for future failure, but may represent much of the background noise and may, therefore, be used for calculating difference images of the other spectrum tiles. This allows to improve the clustering as information contained in most of the spectrum tiles is removed and density of information is increased. Other filtering techniques may be applied to the spectrum tiles or noise sections.

For example, in one embodiment of the method for predicting failure of a noise-emitting apparatus, the extracting of noise sections comprises generating data reduced characteristic representations of the noise sections, and the similarity measure between the noise sections is a similarity measure between the data reduced characteristic representations of said noise sections. A data reduced characteristic representation of a noise section may be a "fingerprint" of the noise section able to identify the distinguishing characteristics of the noise section it represents and may be, for example, a sub-sampled or high-pass filtered version of the noise section. Preferably, the characteristic information can be reduced to a matrix representation, for example when using spectrum tiles as representations for noise sections, allowing for usage of very fast matrix processing, e.g. for comparison.

In an example embodiment, the generation of data reduced characteristic representations of the noise sections comprises performing a discrete Wavelet transform (DWT) on said noise sections in order to fast and efficiently compress characteristic information contained in the noise section, and selecting a subset of resulting transform coefficients for further processing. The processed noise section may preferably be represented as a spectrum tile. The selected subset of transform coefficients may represent a decreased resolution version of the original noise section. Further data reduction may be achieved by converting the selected subset of transform coefficients into a matrix representation and applying suitable thresholds to restrict matrix entries to a short range of values, e.g. -1, 0 and +1, or just 0 and 1. These data reduced fingerprint matrices may allow for optimized, very fast comparison and matrix processing in order to perform the clustering.

In one embodiment of the method, the generation and rebuilding of section clusters depending on the similarity measure comprises evaluating inconsistency coefficients determined for the noise sections. For this, the generation and rebuilding of section clusters comprises performing a hierarchical cluster analysis for the fingerprints for each noise section and then determining inconsistency coefficients for the generated hierarchical cluster tree for the fingerprints. Inconsistency coefficients provide a measure for difference between objects connected by a link of a hierarchical cluster tree, wherein the larger the inconsistency coefficient, the greater the difference. Hence, any conclusion drawn from comparing the inconsistency coefficients corresponding to a fingerprint and, therefore, of a noise section, with those of another fingerprint will be based predominantly on common differences rather than just common similarities.

In a preferred embodiment, a Jaccard index, i.e. a Jaccard similarity coefficient, is determined as similarity measure between fingerprints or representations of them based on their inconsistency coefficients. The Jaccard index is a suitable similarity measure especially for measuring similarity between finite sample sets (such as inconsistency coefficients of fingerprint matrices of transform coefficients of noise sections), and is defined as the size of the intersection divided by the size of the union of the sample sets.

In one embodiment of the method for predicting failure of a noise-emitting apparatus, assigning a particular noise section to a particular section cluster comprises adding the particular noise section to the particular section cluster, if the similarity measure indicates that the particular noise section belongs to a predefined amount of most similar cluster members. In other words, in this embodiment, the amount of noise sections (or their corresponding fingerprint representations) that can become members of a section cluster is limited by a predefined amount or threshold, and not all noise sections where the clustering decision was to assign them to a particular section cluster are actually added to the particular section cluster. Only the best suitable to define the section cluster are kept whereas others are not added. This includes that previous members may be replaced, if new, more suitable members become available. Therefore, the number of cluster entries a new particular noise section as a potential cluster member needs to be compared with, as well as required computation time, is limited.

Furthermore, in an example embodiment, newly assigned section clusters not with similar, but identical fingerprint values, may not be used for replacing previous cluster members, therefore reducing computation time for unnecessary comparisons.

In one embodiment, a number of noise sections assigned to a corresponding section cluster is stored associated with said corresponding section cluster. As described above, the number of noise sections assigned to a corresponding section cluster may be higher than the number of noise sections actually added to the section cluster. Storing or saving said number of assigned noise sections independently of whether or not the particular noise section has been added to the section cluster or not keeps that number available for evaluation of newly received noise sections by providing a measure of regularity of the noise related to the cluster. If an incoming noise section is assigned to a cluster with a high number of assignments, the noise is more likely to be a regular noise, while an assignment to a section cluster, if any, that has only a low number of previous assignments is an indication for an irregular noise and may deserve attention, even though no failure may yet be assigned to the related sequence of connected section clusters.

In one embodiment of the method, said noise events are detected using sensor data generated from dedicated noise event sensors. A dedicated noise event sensor may be, for example, a microphone placed in close distance to the noise-emitting apparatus and connected via an interface with a computer or other programmable apparatus, adapted to carry out the steps of the method. As another example, the microphone may be a microphone connected to or being a part of a smartphone with a processing device, adapted to carry out the steps of the method. Therefore, the noise-emitting apparatus itself does not need to be prepared or changed to provide the noise signals, and prediction of failure of the noise-emitting apparatus may be carried out with a failure prediction system that does not require much installation effort or expertise.

In an embodiment, the noise events may be detected by evaluating additional external signals, e.g. provided as additional metadata, for example for a noise-emitting apparatus being an elevator, timestamps for opening and closing of the elevator doors.

In another embodiment, said noise events are detected by analyzing the received noise signals. This may be achieved by applying suitable audio processing algorithms, or after transformation of the received audio signals into a corresponding frequency spectrum representation, by applying suitable image processing algorithms. This allows to avoid reliance on additional metadata, probably acquired using an additional sensor. Further, pre-existing libraries of sound may be used to identify noise events.

In one embodiment, the received noise of a noise-emitting apparatus is received noise emitted from an elevator. However, in other embodiments, noise signals are received from other noise-emitting apparatuses and used for failure prediction.

In a preferred embodiment of the method, the step of receiving query noise signals comprises receiving query noise signals from the noise emitting apparatus during one or more query-periods of time having durations matching durations of one or more of said consecutive periods of time, and the step of extracting a query noise section from the query noise signals and assigning the query noise section to a most similar query section cluster comprises the following: for each of the one or more consecutive periods of time, extracting a plurality of query noise sections from said query-noise signals and assigning each of the query noise sections to most similar of said section clusters with respect to the similarity measure.

And in this embodiment the step of predicting a remaining time to failure comprises predicting a remaining time to failure, when one or more of the sequences of connected section clusters having assigned failure timestamps at least partially matches a query-sequence of one or more of the most similar section clusters, wherein the predicted time to failure depends at least on a comparison between the corresponding section cluster timestamp of a most recent section cluster of the query-sequence of one or more of said most similar section clusters and the failure timestamp assigned to the sequence of connected section clusters said most recent section cluster belongs to.

In this embodiment, query noise signals, i.e. noise signals that may be used for querying the available sequences of connected section clusters in order to predict a remaining time to failure, are received over a single ("one consecutive") period of time or over more than one consecutive periods of time and for each of the consecutive period(s) of time, extracted query noise sections are assigned to most similar, i.e. best fitting section clusters, which, thereby, become "query section clusters", and the prediction of the remaining time to failure is carried out by identifying sequences of connected section clusters which section clusters completely or at least partly match with sequences of section clusters that can be identified within the section clusters that became query section clusters, i.e. where query noise section have been assigned to. If a match between sequences can be found, the most recent query section cluster, i.e. the section cluster having a relative timestamp closest to the failure timestamp of the matching sequence of connected section clusters, allows to predict the remaining time to failure. The described embodiment allows to predict the remaining time to failure with a higher accuracy and reduces or avoids non-useful notifications of future failures. This is achieved by relying not only on the evaluation of single query noises but on a chain or sequence of query noise sections belonging to consecutive periods of time that match with a (part of a) sequence of connected section clusters serving as a model for a history preceding a particular failure.

In an example embodiment, only clearly identified most similar query section clusters are used to build said query-sequence of one or more of said most similar query section clusters, wherein a most similar query section cluster is considered a clearly identified most similar query section cluster, if more query noise sections were assigned to said most similar query section cluster than a predefined identification threshold. During each of the consecutive periods of time of receiving query noise signals, probably many query noise sections may match a same query section cluster. In order to further improve reliability of the prediction result, only clusters having assigned a certain amount of query noise sections, e.g. more than 50, 100 or 150, depending on the noise-emitting apparatus and length of measured period of time, are considered as stable indicators to be used for prediction.

According to another aspect of the invention, a system for predicting failure of a noise-emitting apparatus comprises a noise receiving means adapted to receive noise signals from a noise-emitting apparatus during consecutive periods of time, and a programmable apparatus comprising at least a processing device and a memory, adapted to
- for each of the consecutive periods of time, extract from the received noise signals noise sections with respect to noise events contained in the noise sections;
- generate section clusters of noise sections belonging to a first period of time depending on a similarity measure between the noise sections, and assign a corresponding section cluster timestamp;
- for each subsequent period of time, at least rebuild the section clusters, wherein noise sections belonging to the subsequent period of time are assigned depending on the similarity measure to the section clusters or newly generated section clusters, and assign a subsequent corresponding section cluster timestamp, to generate sequences of connected section clusters;
- after occurrence of a failure of the noise-emitting apparatus, assign at least a failure timestamp to the sequence of connected section clusters that comprises at least the section cluster having assigned the last noise section prior to the failure; and
- receive query noise signals from the noise-emitting apparatus,
- extract a query noise section from the query noise signals and assign the query noise section to a most similar query section cluster of the section clusters with respect to the similarity measure, and
- predict a remaining time to failure depending at least on a comparison between the corresponding section cluster timestamp of the most similar query section cluster and the failure timestamp assigned to the sequence of connected section clusters the most similar query section cluster belongs to.

The described system implements the advantages and characteristics of the claimed method as part of a system for predicting failure of a noise-emitting apparatus. The described system is a system adapted to carry out a method according to an embodiment of the invention. The described system may be provided as a single apparatus, e.g. a smartphone with a microphone and a processing device and a memory, adapted, e.g. programmed, to execute instructions for carrying out the method as described above. However, in another embodiment, the system may comprise, e.g., a local client device providing or being connected to one or more microphones for receiving the noise signals from the noise-emitting apparatus, wherein the local client device is connected via a data network to a remote server device adapted, e.g. programmed, to carry out the noise signal processing and clustering.

According to yet another aspect of the invention, a computer program product comprises code portions for executing steps of a method according an embodiment of the invention as described above when run on a programmable apparatus. In other words, the computer program product comprises code portions that, when executed on the programmable apparatus, enable the programmable apparatus to carry out a method according to an embodiment of the invention.

The computer program product implements the advantages and characteristics of the claimed method for predicting failure of a noise-emitting apparatus. The programmable apparatus may be the programmable apparatus of the system for predicting failure of a noise-emitting apparatus. The invention may, for example, at least partly be implemented in a computer program for running on a computer system, at least including software code portions for performing steps of the method according to the invention when run on a programmable apparatus, such as a computer system, or for enabling the programmable apparatus to perform functions of a device or system according to the invention. The computer program may be provided on a computer readable storage medium, i.e. a data carrier, such as a CD, DVD, memory card or other storage medium, stored with data loadable in a memory of the programmable apparatus or computer system, wherein the data represents the computer program. As another example, the data carrier may further be a data connection, such as a telephone cable or a wireless connection. Computer systems may be found in many forms including but not limited to servers, workstations, personal computers, notepads, personal digital assistants, smartphones and various other devices. As an example embodiment, a smartphone may comprise a mobile application (App) for carrying out steps of the method.

While not explicitly described, the presented embodiments may be employed in any combination or sub-combination.

### Brief description of the drawings

- Fig. 1: schematically illustrates an example of a sequence of section clusters;
- Fig. 2: schematically illustrates an example of a method for predicting failure of a noise-emitting apparatus according to an embodiment of the invention;
- Fig. 3: schematically illustrates an example for the creation of a sequence of connected section clusters by section cluster generation and rebuilding;
- Fig. 4: schematically illustrates an example of a processing flow of received noise signals;
- Fig. 5: schematically illustrates an example for the determination of a fingerprint matrix representation of a spectrum tile; and
- Fig. 6: schematically illustrates an example of a system for predicting failure of a noise-emitting apparatus according to another embodiment of the invention.

### Description of embodiments

For a better understanding, the invention will now be explained in more detail in the following description with reference to the drawings. It is understood that the invention is not limited to these exemplary embodiments and that specific features can expediently be combined and/or modified without departing from the scope of the present invention as defined in the appended claims.

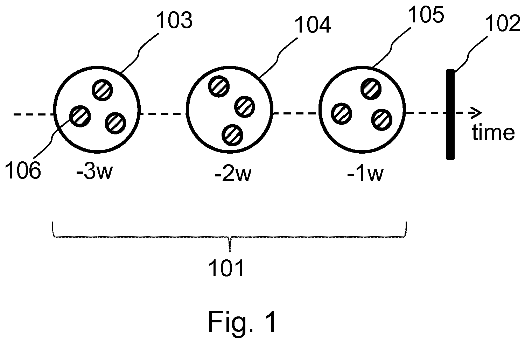

In Fig. 1, an example of a sequence of section clusters 101 is schematically illustrated. In order to predict when a future failure event 102 of a noise-emitting apparatus will likely occur, recorded noise data is examined to find signs or indicators which precede such a failure event. For this, noise sections are extracted from the received noise signal data. A noise section may be a section of a received and recorded noise signal, corresponding to a time period where a noise event has been detected. The structuring is achieved by clustering the extracted noise sections, repeatedly, at least once each time a certain period of time has been used for receiving and extracting noise sections and keeping track of changes of each section cluster, from a section cluster corresponding to one period of time to the connected section cluster corresponding to the subsequent period of time etc., thereby generating one or more sequences of connected section clusters, such as sequence 101, representing sequences of possible preceding chains or sequences of noise (sections) over time.

The shown sequence 101 of section clusters consists of a first section cluster 103, a second section cluster 104 and a third section cluster 105. Each of the section clusters 103, 104, 105 comprises one or more noise sections, such as noise section 106 belonging to the first section cluster 103. The noise section may be represented in a transformed and/or data reduced version, for example as a spectrum tile, i.e. a section of the noise signal over time after transformation into the frequency domain. A data reduced version of the noise section may be, for example, represented as a "fingerprint" matrix exhibiting certain characteristics of the noise section after data compression.

The sequence of section clusters has been generated during a preceding training phase when section clusters of noise sections belonging to a first period of time were generated depending on a similarity measure between the noise sections, and a corresponding section cluster timestamp has been assigned. Then for each subsequent period of time, the section clusters were rebuilt, wherein noise sections belonging to the subsequent period of time were assigned depending on the similarity measure to the section clusters or newly generated section clusters, and a subsequent corresponding section cluster timestamp was assigned. In the example shown in Fig. 1, section clusters have been generated and rebuild three times with timestamps differing by one week. Once a failure event occurred, timestamps of the section clusters that preceded the failure event have been changed to relative timestamps -1w (one week until failure), -2w (two weeks until failure) and -3w (three weeks until failure). Hence, the sequence of section clusters 101 represents a model for sequences of possible noise events (represented by the noise sections) that may precede a similar future failure event 102.

Depending on the noise-emitting apparatus the prediction method is applied to, more or less than three weeks may be used for recording noise signal data. For example, for elevator surveillance, more than three weeks, usually several months, e.g. 6 months or more, may be used for recording and evaluating noise data signals.

Once stable models of sequences of section clusters are available, newly recorded noise signal data, i.e. query noise signals, can be compared with the available section clusters and, for example, an assignment to one of the clusters as the most similar query section cluster will provide an indication, when the failure event corresponding to the sequence of section clusters with the most similar query section cluster, i.e. the section cluster having assigned the newly recorded query noise section, will likely occur. A degree of similarity to the found most similar query section cluster may also serve as an information on the probability that the predicted failure event will indeed occur. In case the noise-emitting apparatus does not stop service, the prediction may, for example, be checked at subsequent points in time during the remaining time to failure to ascertain the prediction.

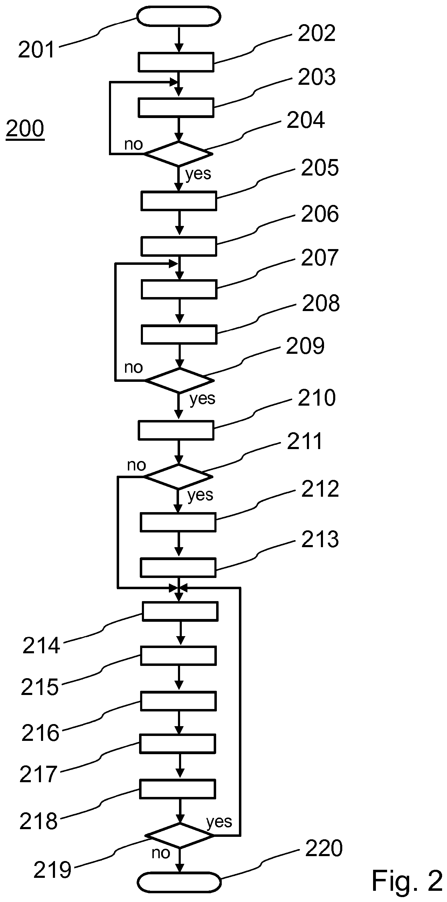

In Fig. 2, an example of a method 200 for predicting failure of a noise-emitting apparatus according to an embodiment of the invention is schematically illustrated. In the shown method 200, after start 201, noise signals are received 202 from a noise-emitting apparatus during consecutive periods of time. In other words, noise signals are received continuously and the time of receiving is divided into a flow of consecutive periods of time, which could be of equal length (but do not have to). In the shown embodiment, the amount of consecutive periods of time is limited, i.e. the time of receiving of noise signals is limited and the noise is recorded. Noise sections are then extracted 203 from the received noise signals with respect to noise events contained in said noise sections. In step 204, it is tested whether or not the last of the consecutive periods of time has been processed. In case the answer is no, the step of extracting 203 noise sections is repeated.

This is repeated for each of the consecutive periods of time, i.e. until the answer is yes. However, in other embodiments, the steps of receiving 202 noise signals and extracting 203 noise sections may be an ongoing process, even after the method continued with step 205, leaving out the test of step 204. Further, in yet another embodiment, the repetition is not carried out for each of the consecutive periods of time, but one or more of said periods of time may be left out, for example depending certain external parameters. For example, in case it is known that the noise-emitting apparatus has been out of service for some time while the method has not been halted, a user or operator of the system carrying out the method may decide to leave out said out of service time. The system may also be arranged to decide by itself depending on suitable evaluation of sensor data.

In a next step, the method continues with generating 205 section clusters of noise sections belonging to a first period of time depending on a similarity measure between the noise sections. Then, a corresponding section cluster timestamp is assigned 206 to the section cluster.

Then, a rebuilding 207 of the section clusters is carried out, wherein noise sections belonging to the subsequent period of time are assigned depending on the similarity measure to the section clusters, i.e. to previously generated section clusters, or to newly generated section clusters, together with an assigning 208 of a subsequent corresponding section cluster timestamp. In step 209, it is tested whether or not the last of the consecutive periods of time has been processed. In case the answer is no, the steps of rebuilding 207 the section clusters and assigning 208 of a subsequent corresponding section cluster timestamp are repeated. In order to generate sequences of connected section clusters, this is repeated for each subsequent period of time (of said consecutive periods of time), i.e. until the answer is yes.

In the shown embodiment, the generated and rebuilt section clusters are then 210 stored associated with the corresponding section cluster timestamps and an identifier corresponding to the sequence of connected section clusters the stored section cluster belongs to.

Anytime after an occurrence of a failure 211 of the noise-emitting apparatus, i.e. if the answer to whether a failure of the noise-emitting apparatus has occurred is yes, a failure timestamp is assigned 212 to the sequence of connected section clusters that comprises at least the section cluster having assigned the last noise section prior to said failure. In the shown embodiment, additionally a failure type identifier identifying a corresponding type of the failure is assigned 213, after said occurrence of the failure, to the sequence of connected section clusters that comprises at least the section cluster having assigned the last noise section prior to the failure.

Furthermore, once sequences of connected section clusters are available, the method comprises receiving 214 query noise signals from the noise-emitting apparatus, extracting 215 a query noise section from the query noise signals and assigning 216 the query noise section to a most similar query section cluster of the section clusters with respect to the similarity measure. In other words, the query noise section is compared with many or all of the available clusters, newest and older and belonging to any of the generated sequences of connected section clusters, in order to determine the best fitting section cluster for the recently received noise section, i.e. the query noise section. Then, a step of predicting 217 a remaining time to failure is carried out, depending at least on a comparison between the corresponding section cluster timestamp of the determined most similar query section cluster and the failure timestamp assigned to the sequence of connected section clusters the most similar query section cluster belongs to. The remaining time to failure can be predicted, if the sequence of connected section clusters the most similar query section cluster belongs to, has already assigned a failure timestamp, i.e. has already been identified as a model for possible sequences of noise sections preceding the failure. In the shown embodiment of the method, additionally the type of future failure can be predicted 218, if a failure type identifier has been assigned to the corresponding sequence of connected section clusters. In step 219, it is checked whether or not in the meantime new, i.e. further, recently received, query noise signals have been received. If the answer is yes, the steps of receiving 214 query noise signals, extracting 215 the (now) most recent noise section and assigning 216 of the most recent query noise section to a most similar query section cluster, and the steps of predicting 217 a remaining time to failure and of prediction a type of future failure 218 are repeated. Otherwise, the method ends 220.

In an example embodiment of the method, the step of receiving 214 query noise signals comprises receiving query noise signals from the noise emitting apparatus during one or more query-periods of time having durations matching durations of one or more of the consecutive periods of time. Further, in that embodiment the steps of extracting 215 a query noise section from the query noise signals and assigning 216 the query noise section to a most similar query section cluster are carried out as follows: for each of the one or more consecutive periods of time, extracting a plurality of query noise sections from the query noise signals and assigning each of the query noise sections to most similar of the section clusters with respect to the similarity measure. Further, in this embodiment the step of predicting 217 a remaining time to failure is carried out conditionally. It comprises predicting a remaining time to failure, when one or more of the sequences of connected section clusters having assigned failure timestamps at least partially matches a query-sequence of one or more of the most similar section clusters, wherein the predicted time to failure depends at least on a comparison between the corresponding section cluster timestamp of a most recent section cluster of the query-sequence of one or more of said most similar section clusters and the failure timestamp assigned to the sequence of connected section clusters said most recent section cluster belongs to. Further, in an example embodiment (not shown), only clearly identified most similar query section clusters are used to build the query-sequence of one or more of said most similar query section clusters, wherein a most similar query section cluster is considered a clearly identified most similar query section cluster, if more query noise sections were assigned to said most similar query section cluster than a predefined identification threshold.

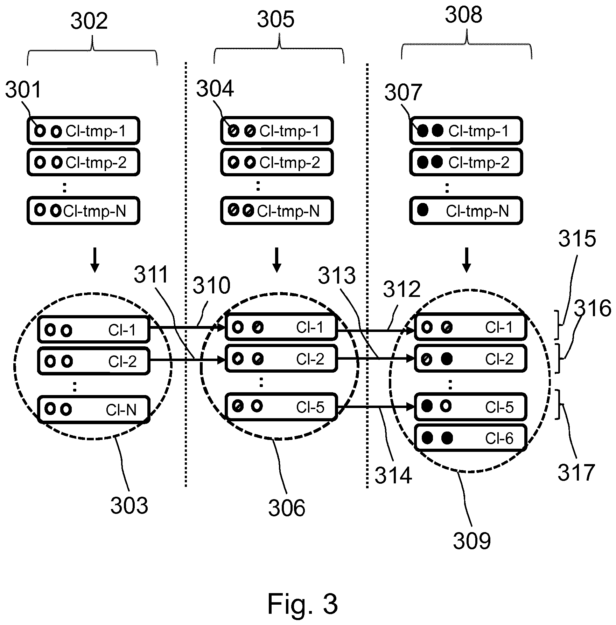

In Fig. 3, an example for the creation of a sequence of connected section clusters by section cluster generation and rebuilding is schematically illustrated. For the extracted noise sections, such as noise section 301 belonging to a first period of time 302, e.g. a first week, temporary section clusters labeled "Cl-tmp-1", "Cl-tmp-2",..., "CI-tmp-N" of noise sections extracted during said first period of time are generated. The chosen clustering algorithm determines what kind of similarity measure between the noise sections is used to actually determine the clusters. As there is no merging or rebuilding of the section clusters with previously determined section clusters, the temporary section clusters become the section clusters labeled "CI-1", "Cl-2", ..., "Cl-N", and a corresponding first timestamp 303 is assigned to the set of determined section clusters for the first period of time, e.g. the first week.

Then, for the extracted noise sections, such as noise section 304, belonging to a subsequent period of time 305, e.g. a second week, again temporary section clusters labeled "Cl-tmp-1", "Cl-tmp-2", ..., "CI-tmp-N" of noise sections extracted during said subsequent period of time are generated. With the noise sections belonging to these temporary clusters and the previously determined section clusters labeled "CI-1", "Cl-2", ..., "Cl-N", having assigned the first timestamp 303, a rebuilding of the section clusters labeled "Cl-1", "Cl-2", ..., "Cl-N" is tried, resulting in a rebuilt set of section clusters labeled "Cl-1", "Cl-2", ..., "Cl-5", with noise sections potentially originating from any of the section clusters generated so far. The rebuilt may result in more or less section clusters, for example five section clusters as shown here. A corresponding second timestamp 306 is assigned to the set of determined section clusters for the subsequent, i.e. the second, period of time, e.g. the second week.

The same is repeated for the next subsequent period of time: For the extracted noise sections, such as noise section 307, belonging to a next subsequent period of time 308, e.g. a third week, again temporary section clusters labeled "CI-tmp-1", "Cl-tmp-2", ..., "CI-tmp-N" of noise sections extracted during said next subsequent period of time are generated. With the noise sections belonging to these temporary clusters and the previously determined clusters labeled "CI-1", "Cl-2", ..., "Cl-N", having assigned the second timestamp 306, a rebuilding of the section clusters labeled "CI-1", "Cl-2", ..., "Cl-5" is tried, resulting in a rebuilt set of section clusters labeled "Cl-1", "Cl-2", ..., "Cl-5", and a newly generated section cluster labeled "Cl-6", with noise sections potentially originating from any of the section clusters generated either during the current, i.e. the next subsequent period of time, e.g. the third week, or the section clusters generated during the previous period of time, i.e., for example, the second week. A corresponding third timestamp 309 is assigned to the set of determined section clusters for the next subsequent period of time, e.g. for the third week.

As indicated by arrows 310, 311, 312, 313, 314, section clusters sharing the same label, but belonging to subsequently timestamped sets of section clusters are considered sequences of connected section clusters, such as sequence 315 of connected section clusters and sequence 316 of connected section clusters. Once a failure occurs and can be assigned to a cluster of one of the sequences, the particular sequence will be treated as a model for the particular type of failure and the corresponding timestamps can be put into relation to the timestamp of the failure event. As the meaning is unique and does not change afterwards, the sequences should consist of stable clusters, therefore, for example, sequence 317 of connected section clusters does not rely on clustering performed for the first extracted noise sections belonging to a first period of time 302.

However, in another embodiment, clustering may be based on previously available cluster sets derived from existing noise or sound sample libraries, e.g. provided by the producer of the noise-emitting apparatus and/or acquired during previous surveillance of noise-emitting apparatuses of the same type.

Noise sections extracted from later recorded noise signals as query noise signals may then be tested against each cluster of the sequences of clusters, thereby determining the corresponding timestamp and also the type of failure assigned to the sequence the cluster belongs to.

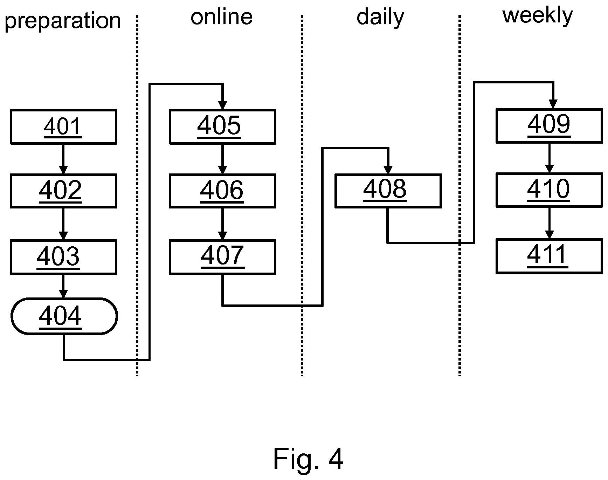

In Fig. 4, an example of a processing flow for received noise signals is schematically illustrated. During a preparation phase, in a first step 401, noise signal data, i.e. audio emitted from the noise-emitting apparatus, is received and recorded. In a next step 402, additional metadata is received, in particular metadata that allows to easily select periods of time that contain activity of the noise-emitting apparatus. For surveillance of an elevator, metadata may, for example, contain timestamps of begin and end of the movement of the elevator between floors etc. In a next step 403, these periods of time containing activity are extracted from the recorded noise signals. These periods of time containing activity 404, such as noise during movement of the elevator, are provided for further processing.

As these extracted periods of time containing activity become available, i.e. "online", in a next step 405, in the shown example one of the now available extracted periods of time containing activity is determined and selected as the one containing the least activity, e.g. the quietest moving of the elevator, which can then be used for determining noise difference signals which may then be used for the further processing. In a next step 406, noise events in noise signals of the corresponding remaining periods of time are detected and noise sections containing these noise events are extracted. In a next step 407, the extracted noise sections are compared with already existing section clusters and are assigned to one of the section clusters. However, not all noise sections will fit to one of the existing section clusters. These will be labeled, e.g., "unknown" noise section and will be used for clustering later on, e.g. weekly.

In a next step 408, which may, for example, be carried out weekly, section cluster entries are optimized. Here, the noise sections now assigned to the particular section cluster are filtered. For example, only a certain amount of most similar noise sections assigned as entries to the section cluster will actually be added to the section cluster, whereas other, less similar noise sections will be removed.

In a next step 409, which, for example, will be carried out on a weekly basis, the noise sections previously labeled "unknown" will be subject to a clustering, before in a next step 410, all clusters associated with the week are rebuilt. In a next step 411, a cleaning of rebuilt clusters is performed for enhanced performance when later comparing query noise with the available clusters. The cleaning includes removing newly generated clusters being identical or very similar to already known clusters.

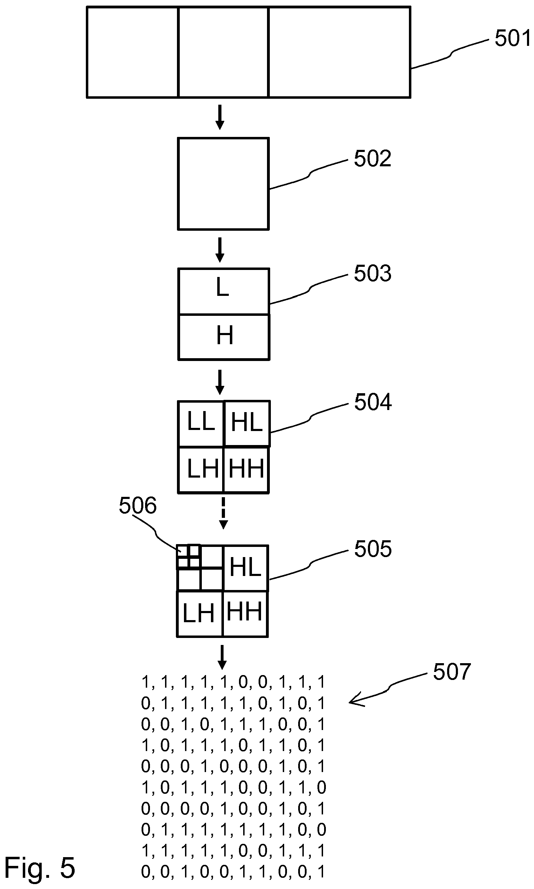

In Fig. 5, an example for the determination of a fingerprint matrix representation of a spectrum tile is schematically illustrated. In order to enable very fast generation and rebuilding of section clusters and comparison of most recently received noise sections with existing section clusters, the noise sections are filtered and transformed into data reduced unique "fingerprint" representations of the noise sections originally extracted from the received noise signals. It is preferred to provide fingerprint matrix representations, as very fast algorithms for matrix operations and comparisons are available.

First, received noise signals are transformed into a corresponding representation in a frequency spectrum domain, e.g. using a Fourier transform or a discrete Cosine transform or any other suitable transform. The result can be displayed as a frequency spectrum diagram with pixels having (x, y) coordinates representing (time, frequency) and pixel luminance or color corresponding to intensity or energy. This converts the processing of noise and sound to a processing of a "noise frequency spectrum image" 501, and a noise section is represented as a spectrum tile 502 that can be treated as an "image representation" of the noise section, thereby allowing to apply image processing techniques.

In order to generate a data reduced characteristic representation of the noise section, now spectrum tile 502, in the shown example a discrete Wavelet transform, e.g. a Haar Wavelet transform, is applied to the spectrum tile 502, with at first columns of the spectrum tile "image" transformed 503, low pass portion of the resulting coefficients labeled "L", high pass portion of the resulting coefficients labeled "H", then additionally with rows transformed 504, giving the result of a first iteration of a DWT. The resulting coefficients can be used for efficiently compressed representation of the original spectrum tile image. In particular, the low pass "LL" portion of the coefficients corresponds to a representation of the original spectrum tile with reduced resolution. Depending on the sound or noise the spectrum tile represents, more compression may be applied. In the shown example, two more iterations are performed, resulting in a three level decomposition 505 of the original spectrum tile. One or more of the subsets of DWT coefficients corresponding to one or more frequency ranges, e.g. subset of DWT coefficients 506 representing the spectrum tile in a very reduced resolution, are then selected and converted into a matrix representation for further data reduction. Then, suitable thresholds are applied to restrict the matrix entries to a short range of values, 0 and 1 in the shown resulting fingerprint matrix 507. Data reduced fingerprint matrices enable optimized, very fast comparison and matrix processing to perform the clustering.

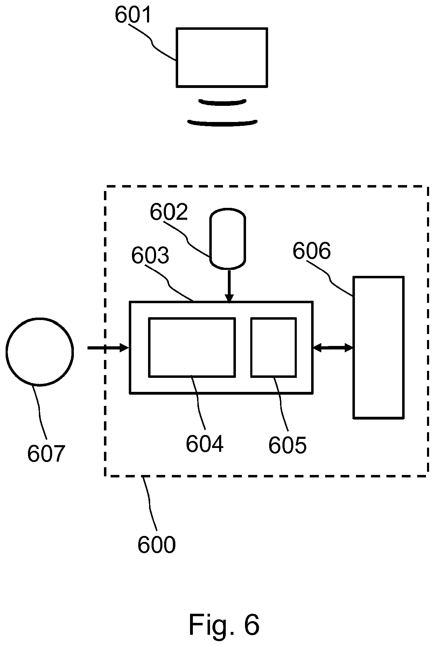

In Fig. 6, an example of a system 600 for predicting failure of a noise-emitting apparatus 601 according to another embodiment of the invention is schematically illustrated. The system 600 for predicting failure of a noise-emitting apparatus 601 comprises a noise receiving means 602, such as a microphone, adapted to receive noise signals from a noise-emitting apparatus 601 during consecutive periods of time. For this, the microphone is located in close proximity, not necessarily in contact with, the noise-emitting apparatus 601. The noise receiving means 602 may be, for example, a microphone of a smartphone, or may be connected to a computer, smartphone or any other programmable apparatus.

The system further comprises a programmable apparatus 603 with at least a processing device 604, such as a processor, central processing unit (CPU), microcontroller, etc., and a memory 605. The memory comprises code portions, e.g. loaded from a computer program product 607, e.g. provided as a computer readable storage medium, wherein the computer program product 607 comprises code portions that, when executed on the programmable apparatus 603, enable the programmable apparatus 603 to carry out a method according to an embodiment of the invention. In other words, the system according to the invention is adapted to
- for each of the consecutive periods of time, extract from the received noise signals noise sections with respect to noise events contained in the noise sections;
- generate section clusters of noise sections belonging to a first period of time depending on a similarity measure between the noise sections, and assign a corresponding section cluster timestamp;
- for each subsequent period of time, at least rebuild the section clusters, wherein noise sections belonging to the subsequent period of time are assigned depending on the similarity measure to the section clusters or newly generated section clusters, and assign a subsequent corresponding section cluster timestamp, to generate sequences of connected section clusters;
- after occurrence of a failure of the noise-emitting apparatus, assign at least a failure timestamp to the sequence of connected section clusters that comprises at least the section cluster having assigned the last noise section prior to the failure; and
- receive further noise signals as query noise signals from the noise-emitting apparatus;
- extract a query noise section from the query noise signals and assign the query noise section to a most similar query section cluster of the section clusters with respect to the similarity measure, and
- predict a remaining time to failure depending at least on a comparison between the corresponding section cluster timestamp of the most similar query section cluster and the failure timestamp assigned to the sequence of connected section clusters the most similar query section cluster belongs to.

However, in another embodiment of the system, the programmable apparatus 603 is not directly connected to the noise receiving means 602, but indirectly via a client device that is connected to the noise receiving means 602 and is connected via a data communication network to a remote server device adapted, e.g. programmed, to carry out the noise signal processing and clustering.

The shown system 600 also comprises a display device 606 or other user interface at least for communicating the prediction results to a user in order to trigger suitable maintenance within a remaining time to failure.

Those skilled in the art will recognize that the boundaries between blocks are merely illustrative and that alternative embodiments may merge blocks or impose an alternative composition of functionality upon various blocks. Unless stated otherwise, terms such as "first" and "second" are used arbitrarily to distinguish between the elements such terms describe. Thus, these terms are not necessarily intended to indicate temporal or other prioritization of such elements. The mere fact that certain features are recited in mutually different claims does not indicate that a combination of these features cannot be used in advantage.

It should be noted that, depending on the embodiment, method steps, although described and illustrated according to certain sequence or order of steps, may at least partly be carried out in a different order or simultaneously. Other steps may be added and certain steps described here may be left out.

In other words, the present description illustrates certain embodiments, and while the principles of the invention have been described above in connection with specific methods and apparatus, it is clearly understood that the description is made only by way of example and not as a limitation of the scope of the invention as defined by the appended claims.

### List of reference signs

- 101: sequence of section clusters
- 102: future failure event
- 103: first section cluster
- 104: second section cluster
- 105: third section cluster
- 106: noise section
- 200: method for predicting failure of a noise-emitting apparatus
- 201: start
- 202: receiving noise signals
- 203: extracting noise sections
- 204: step
- 205: generating section clusters
- 206: assigning a corresponding section cluster timestamp
- 207: rebuilding the section clusters
- 208: assigning a subsequent corresponding section cluster timestamp
- 209: step
- 210: storing
- 211: occurrence of a failure
- 212: assigning failure timestamp
- 213: assigning a failure type identifier
- 214: receiving query noise signals
- 215: extracting a query noise section
- 216: assigning the query noise section to a query section cluster
- 217: predicting a remaining time to failure
- 218: predicting the type of future failure
- 219: step
- 220: end
- 301: noise section
- 302: first period of time
- 303: first timestamp
- 304: noise section
- 305: subsequent period of time
- 306: second timestamp
- 307: noise section
- 308: next subsequent period of time
- 309: third timestamp
- 310: arrow
- 311: arrow
- 312: arrow
- 313: arrow
- 314: arrow
- 315: sequence of connected section clusters
- 316: sequence of connected section clusters
- 317: sequence of connected section clusters
- 401: receiving noise signal data
- 402: receiving metadata
- 403: extracting periods of time containing activity
- 404: periods of time containing activity
- 405: selecting period of time containing the least activity
- 406: detecting noise events
- 407: comparing and assigning extracted section clusters
- 408: optimizing section cluster entries
- 409: clustering unknown noise sections
- 410: rebuilding clusters
- 411: cleaning of rebuilt clusters
- 501: "noise frequency spectrum image"
- 502: spectrum tile
- 503: columns transformed
- 504: rows transformed
- 505: three level decomposition of the original spectrum tile
- 506: subset of DWT coefficients
- 507: fingerprint matrix
- 600: system for predicting failure of a noise-emitting apparatus
- 601: noise-emitting apparatus
- 602: noise receiving means
- 603: programmable apparatus
- 604: processing device
- 605: memory
- 606: display device
- 607: computer program product

## Claims

1. A method (200) for predicting failure of a noise-emitting apparatus, comprising
- receiving (202) noise signals from a noise-emitting apparatus during consecutive periods of time, and
- for each of said consecutive periods of time, extracting (203) from said received noise signals noise sections with respect to noise events contained in said noise sections and corresponding to detectable activity within the corresponding noise signal;
- generating (205) section clusters of noise sections belonging to a first period of time depending on a similarity measure between said noise sections, and assigning (206) a corresponding section cluster timestamp;
- for each subsequent period of time, at least rebuilding (207) said section clusters, wherein noise sections belonging to said subsequent period of time are assigned depending on said similarity measure to said section clusters or newly generated section clusters, and assigning (208) a subsequent corresponding section cluster timestamp, to generate sequences of connected section clusters;
- after occurrence of a failure (211) of the noise-emitting apparatus, assigning (212) at least a failure timestamp to the sequence of connected section clusters that comprises at least the section cluster having assigned the last noise section prior to said failure; and
- receiving (214) query noise signals from the noise-emitting apparatus;
- extracting (215) a query noise section from the query noise signals and assigning (216) said query noise section to a most similar query section cluster of the section clusters with respect to said similarity measure, and
- predicting (217) a remaining time to failure depending at least on a comparison between the corresponding section cluster timestamp of said most similar query section cluster and said failure timestamp assigned to the sequence of connected section clusters said most similar query section cluster belongs to.

2. The method of claim 1, wherein said generated and rebuilt section clusters are stored (210) associated with the corresponding section cluster timestamps and an identifier corresponding to the sequence of connected section clusters the stored section cluster belongs to.

3. The method of claim 1 or claim 2, wherein after said occurrence of a failure (211) of the noise-emitting apparatus, additionally a failure type identifier identifying a corresponding type of said failure is assigned (213) to said sequence of connected section clusters that comprises at least said section cluster having assigned the last noise section prior to said failure.

4. The method of any of the preceding claims, wherein receiving (202) said noise signals comprises transforming said noise signals to a frequency spectrum domain and extracting said noise sections from said noise signals comprises extracting spectrum tiles from a three-dimensional noise spectrum representation of said noise signals.

5. The method of claim 4, wherein said extracting spectrum tiles comprises filtering said spectrum tiles depending on one or more other spectrum tiles.

6. The method of any of the preceding claims, wherein said extracting (203) of noise sections comprises generating data reduced characteristic representations of said noise sections, and said similarity measure between said noise sections is a similarity measure between said data reduced characteristic representations of said noise sections.

7. The method of claim 6, wherein said generating data reduced characteristic representations of said noise sections comprises performing a discrete Wavelet transform on said noise sections and selecting a subset of resulting transform coefficients for further processing.

8. The method of any of the preceding claims, wherein said generating (205) and rebuilding (207) of section clusters depending on said similarity measure comprises evaluating inconsistency coefficients determined for said noise sections.

9. The method of any of the preceding claims, wherein assigning a particular noise section to a particular section cluster comprises adding said particular noise section to said particular section cluster, if said similarity measure indicates that the particular noise section belongs to a predefined amount of most similar cluster members.

10. The method of any of the preceding claims, wherein a number of noise sections assigned to a corresponding section cluster is stored associated with said corresponding section cluster.

11. The method of any of the preceding claims, wherein said noise events are detected using sensor data generated from dedicated noise event sensors.

12. The method of any of claims 1 to 10, wherein said noise events are detected by analyzing said received noise signals.

13. The method of any of the preceding claims, wherein said received noise of a noise-emitting apparatus is received noise emitted from an elevator.

14. The method as claimed in any of the preceding claims, wherein
said receiving (214) query noise signals comprises receiving query noise signals from the noise emitting apparatus during one or more query-periods of time having durations matching durations of one or more of said consecutive periods of time;
said extracting (215) a query noise section from the query noise signals and assigning (216) said query noise section to a most similar query section cluster comprises
for each of said one or more consecutive periods of time, extracting a plurality of query noise sections from said query-noise signals and assigning each of said query noise sections to most similar of said section clusters with respect to said similarity measure; and
said predicting (217) a remaining time to failure comprises predicting a remaining time to failure, when one or more of the sequences of connected section clusters having assigned failure timestamps at least partially matches a query-sequence of one or more of said most similar section clusters, wherein the predicted time to failure depends at least on a comparison between the corresponding section cluster timestamp of a most recent section cluster of the query-sequence of one or more of said most similar section clusters and the failure timestamp assigned to the sequence of connected section clusters said most recent section cluster belongs to.

15. The method as claimed in claim 14, wherein only clearly identified most similar query section clusters are used to build said query-sequence of one or more of said most similar query section clusters and wherein a most similar query section cluster is considered a clearly identified most similar query section cluster, if more query noise sections were assigned to said most similar query section cluster than a predefined identification threshold.

16. A system (600) for predicting failure of a noise-emitting apparatus (601), comprising
a noise receiving means (602) adapted to receive (202) noise signals from a noise-emitting apparatus (601) during consecutive periods of time, and
a programmable apparatus (603) comprising at least a processing device (604) and a memory (605), adapted to
- for each of said consecutive periods of time, extract (203) from said received noise signals noise sections with respect to noise events contained in said noise sections and corresponding to detectable activity within the corresponding noise signal;
- generate (205) section clusters of noise sections belonging to a first period of time depending on a similarity measure between said noise sections, and assign (206) a corresponding section cluster timestamp;
- for each subsequent period of time, at least rebuild (207) said section clusters, wherein noise sections belonging to said subsequent period of time are assigned depending on said similarity measure to said section clusters or newly generated section clusters, and assign (208) a subsequent corresponding section cluster timestamp, to generate sequences of connected section clusters;
- after occurrence of a failure (211) of the noise-emitting apparatus, assign (212) at least a failure timestamp to the sequence of connected section clusters that comprises at least the section cluster having assigned the last noise section prior to said failure; and
- receive (214) query noise signals from the noise-emitting apparatus;
- extract (215) a query noise section from the query noise signals and assign (216) said query noise section to a most similar query section cluster of the section clusters with respect to said similarity measure, and
- predict (217) a remaining time to failure depending at least on a comparison between the corresponding section cluster timestamp of said most similar query section cluster and said failure timestamp assigned to the sequence of connected section clusters said most similar query section cluster belongs to.

17. A computer program product (607), comprising code portions that, when executed on a programmable apparatus (603), enable the programmable apparatus (603) to carry out a method according to any of the claims 1 to 15.

## Patentansprüche

1. Verfahren (200) zum Vorhersagen eines Ausfalls einer geräuschemittierenden Vorrichtung, umfassend
- Empfangen (202) von Geräuschsignalen von einer geräuschemittierenden Vorrichtung während aufeinanderfolgenden Zeitperioden und
- für jede der aufeinanderfolgenden Zeitperioden Extrahieren (203), aus den empfangenen Geräuschsignalen, von Geräuschabschnitten in Bezug auf Geräuschereignisse, die in den Geräuschabschnitten enthalten sind und mit detektierbarer Aktivität in dem korrespondierenden Geräuschsignal korrespondieren;
- Erzeugen (205) von Abschnittsclustern von Geräuschabschnitten, die zu einer ersten Zeitperiode gehören, in Abhängigkeit von einem Ähnlichkeitsmaß zwischen den Geräuschabschnitten und Zuweisen (206) eines korrespondierenden Abschnittscluster-Zeitstempels;
- für jede nachfolgende Zeitperiode mindestens Wiederherstellen (207) der Abschnittscluster, wobei Geräuschabschnitte, die zu der nachfolgenden Zeitperiode gehören, in Abhängigkeit von dem Ähnlichkeitsmaß den Abschnittsclustern oder neu erzeugten Abschnittsclustern zugewiesen werden, und Zuweisen (208) eines nachfolgenden korrespondierenden Abschnittscluster-Zeitstempels, um Sequenzen von verbundenen Abschnittsclustern zu erzeugen;
- nach dem Auftreten eines Ausfalls (211) der geräuschemittierenden Vorrichtung Zuweisen (212) mindestens eines Ausfall-Zeitstempels zu der Sequenz von verbundenen Abschnittsclustern, die mindestens das Abschnittscluster umfasst, dem der letzte Geräuschabschnitt vor dem Ausfall zugewiesen wurde; und
- Empfangen (214) von Abfrage-Geräuschsignalen von der geräuschemittierenden Vorrichtung;
- Extrahieren (215) eines Abfrage-Geräuschabschnitts aus den Abfrage-Geräuschsignalen und Zuweisen (216) des Abfrage-Geräuschabschnitts zu einem ähnlichsten Abfrage-Abschnittscluster der Abschnittscluster in Bezug auf das Ähnlichkeitsmaß und
- Vorhersagen (217) einer verbleibenden Zeit bis zum Ausfall in Abhängigkeit von mindestens einem Vergleich zwischen dem korrespondierenden Abschnittscluster-Zeitstempel des ähnlichsten Abfrage-Abschnittsclusters und dem Ausfall-Zeitstempel, der der Sequenz von verbundenen Abschnittsclustern zugewiesen wurde, zu dem das ähnlichste Abfrage-Abschnittscluster gehört.

2. Verfahren nach Anspruch 1, wobei die erzeugten und wiederhergestellten Abschnittscluster assoziiert mit den korrespondierenden Abschnittscluster-Zeitstempeln und einer Kennung korrespondierend mit der Sequenz von verbundenen Abschnittsclustern, zu der das gespeicherte Abschnittscluster gehört, gespeichert werden (210).

3. Verfahren nach Anspruch 1 oder Anspruch 2, wobei nach dem Auftreten eines Ausfalls (211) der geräuschemittierenden Vorrichtung zusätzlich eine Ausfalltyp-Kennung, die einen korrespondierenden Typ des Ausfalls identifiziert, der Sequenz von verbundenen Abschnittsclustern, die mindestens das Abschnittscluster umfasst, dem der letzte Geräuschabschnitt vor dem Ausfall zugewiesen wurde, zugewiesen wird (213).

4. Verfahren nach einem der vorhergehenden Ansprüche, wobei Empfangen (202) der Geräuschsignale umfasst, die Geräuschsignale in eine Frequenzspektrumdomäne zu transformieren, und Extrahieren der Geräuschabschnitte aus den Geräuschsignalen umfasst, Spektrumkacheln aus einer dreidimensionalen Geräuschspektrumrepräsentation der Geräuschsignale zu extrahieren.

5. Verfahren nach Anspruch 4, wobei das Extrahieren von Spektrumkacheln umfasst, die Spektrumkacheln in Abhängigkeit von einer oder mehreren anderen Spektrumkacheln zu filtern.

6. Verfahren nach einem der vorhergehenden Ansprüche, wobei das Extrahieren (203) von Geräuschabschnitten umfasst, datenreduzierte Charakteristikarepräsentationen der Geräuschabschnitte zu erzeugen, und das Ähnlichkeitsmaß zwischen den Geräuschabschnitten ein Ähnlichkeitsmaß zwischen den datenreduzierten Charakteristikarepräsentationen der Geräuschabschnitte ist.

7. Verfahren nach Anspruch 6, wobei das Erzeugen von datenreduzierten Charakteristikarepräsentationen der Geräuschabschnitte umfasst, eine diskrete Wavelet-Transformation an den Geräuschabschnitten durchzuführen und eine Teilmenge von resultierenden Transformationskoeffizienten für weitere Verarbeitung auszuwählen.

8. Verfahren nach einem der vorhergehenden Ansprüche, wobei das Erzeugen (205) und Wiederherstellen (207) von Abschnittsclustern in Abhängigkeit von dem Ähnlichkeitsmaß umfasst, Inkonsistenzkoeffizienten, die für die Geräuschabschnitte bestimmt wurden, auszuwerten.

9. Verfahren nach einem der vorhergehenden Ansprüche, wobei Zuweisen eines besonderen Geräuschabschnitts zu einem besonderen Abschnittscluster umfasst, den besonderen Geräuschabschnitt zu dem besonderen Abschnittscluster hinzuzufügen, wenn das Ähnlichkeitsmaß angibt, dass der besondere Geräuschabschnitt zu einer im Voraus definierten Anzahl von ähnlichsten Clustermitgliedern gehört.

10. Verfahren nach einem der vorhergehenden Ansprüche, wobei eine Anzahl von Geräuschabschnitten, die einem korrespondierenden Abschnittscluster zugewiesen wurden, assoziiert mit dem korrespondierenden Abschnittscluster gespeichert wird.

11. Verfahren nach einem der vorhergehenden Ansprüche, wobei die Geräuschereignisse unter Verwendung von Sensordaten, die von dedizierten Geräuschereignissensoren erzeugt werden, detektiert werden.

12. Verfahren nach einem der Ansprüche 1 bis 10, wobei die Geräuschereignisse durch Analysieren der empfangenen Geräuschsignale detektiert werden.

13. Verfahren nach einem der vorhergehenden Ansprüche, wobei das empfangene Geräusch einer geräuschemittierenden Vorrichtung ein empfangenes Geräusch ist, das von einem Aufzug emittiert wird.

14. Verfahren nach einem der vorhergehenden Ansprüche, wobei das Empfangen (214) von Abfrage-Geräuschsignalen umfasst, Abfrage-Geräuschsignale von der geräuschemittierenden Vorrichtung während einer oder mehreren Abfrage-Zeitperioden mit Dauern, die mit den Dauern einer oder mehrerer der aufeinanderfolgenden Zeitperioden übereinstimmen, zu empfangen;
wobei das Extrahieren (215) eines Abfrage-Geräuschabschnitts aus den Abfrage-Geräuschsignalen und Zuweisen (216) des Abfrage-Geräuschabschnitts zu einem ähnlichsten Abfrage-Abschnittscluster umfasst
für jede der einen oder mehreren aufeinanderfolgenden Zeitperioden Extrahieren einer Mehrzahl von Abfrage-Geräuschabschnitten aus den Abfrage-Geräuschsignalen und Zuweisen jedes der Abfrage-Geräuschabschnitte zu ähnlichsten der Abschnittscluster in Bezug auf das Ähnlichkeitsmaß; und
wobei das Vorhersagen (217) einer verbleibenden Zeit bis zum Ausfall umfasst, eine verbleibende Zeit bis zum Ausfall vorherzusagen, wenn eine oder mehrere der Sequenzen von verbundenen Abschnittsclustern, denen Ausfall-Zeitstempel zugewiesen wurden, mindestens teilweise mit einer Abfrage-Sequenz eines oder mehrerer der ähnlichsten Abschnittscluster übereinstimmen, wobei die vorhergesagte Zeit bis zum Ausfall mindestens von einem Vergleich zwischen dem korrespondierenden Abschnittscluster-Zeitstempel eines kürzlichsten Abschnittsclusters der Abfrage-Sequenz eines oder mehrerer der ähnlichsten Abschnittscluster und des Ausfall-Zeitstempels, der der Sequenz von verbundenen Abschnittsclustern zugewiesen wurde, zu dem das kürzlichste Abschnittscluster gehört, abhängt.

15. Verfahren nach Anspruch 14, wobei nur deutlich identifizierte ähnlichste Abfrage-Abschnittscluster zum Herstellen der Abfrage-Sequenz eines oder mehrerer der ähnlichsten Abfrage-Abschnittscluster verwendet werden und wobei ein ähnlichstes Abfrage-Abschnittscluster als ein deutlich identifiziertes ähnlichstes Abfrage-Abschnittscluster angesehen wird, wenn mehr Abfrage-Geräuschabschnitte dem ähnlichsten Abfrage-Abschnittscluster als ein im Voraus definierter Identifizierungsschwellenwert zugewiesen wurden.

16. System (600) zum Vorhersagen eines Ausfalls einer geräuschemittierenden Vorrichtung (601), umfassend
ein Geräuschempfangsmittel (602), angepasst zum Empfangen (202) von Geräuschsignalen von einer geräuschemittierenden Vorrichtung (601) während aufeinanderfolgenden Zeitperioden, und
ein programmierbares Gerät (603), umfassend mindestens eine Verarbeitungsvorrichtung (604) und einen Speicher (605), angepasst zum
- für jede der aufeinanderfolgenden Zeitperioden Extrahieren (203), aus den empfangenen Geräuschsignalen, von Geräuschabschnitten in Bezug auf Geräuschereignisse, die in den Geräuschabschnitten enthalten sind und mit detektierbarer Aktivität in dem korrespondierenden Geräuschsignal korrespondieren;
- Erzeugen (205) von Abschnittsclustern von Geräuschabschnitten, die zu einer ersten Zeitperiode gehören, in Abhängigkeit von einem Ähnlichkeitsmaß zwischen den Geräuschabschnitten und Zuweisen (206) eines korrespondierenden Abschnittscluster-Zeitstempels;
- für jede nachfolgende Zeitperiode mindestens Wiederherstellen (207) der Abschnittscluster, wobei Geräuschabschnitte, die zu der nachfolgenden Zeitperiode gehören, in Abhängigkeit von dem Ähnlichkeitsmaß den Abschnittsclustern oder neu erzeugten Abschnittsclustern zugewiesen werden, und Zuweisen (208) eines nachfolgenden korrespondierenden Abschnittscluster-Zeitstempels, um Sequenzen von verbundenen Abschnittsclustern zu erzeugen;
- nach dem Auftreten eines Ausfalls (211) der geräuschemittierenden Vorrichtung Zuweisen (212) mindestens eines Ausfall-Zeitstempels zu der Sequenz von verbundenen Abschnittsclustern, die mindestens das Abschnittscluster umfasst, dem der letzte Geräuschabschnitt vor dem Ausfall zugewiesen wurde; und
- Empfangen (214) von Abfrage-Geräuschsignalen von der geräuschemittierenden Vorrichtung;
- Extrahieren (215) eines Abfrage-Geräuschabschnitts aus den Abfrage-Geräuschsignalen und Zuweisen (216) des Abfrage-Geräuschabschnitts zu einem ähnlichsten Abfrage-Abschnittscluster der Abschnittscluster in Bezug auf das Ähnlichkeitsmaß und
- Vorhersagen (217) einer verbleibenden Zeit bis zum Ausfall in Abhängigkeit von mindestens einem Vergleich zwischen dem korrespondierenden Abschnittscluster-Zeitstempel des ähnlichsten Abfrage-Abschnittsclusters und dem Ausfall-Zeitstempel, der der Sequenz von verbundenen Abschnittsclustern zugewiesen wurde, zu dem das ähnlichste Abfrage-Abschnittscluster gehört.

17. Computerprogrammprodukt (607), umfassend Codeabschnitte, die, wenn sie in einem programmierbaren Gerät (603) ausgeführt werden, das programmierbare Gerät (603) in die Lage versetzen, ein Verfahren nach einem der Ansprüche 1 bis 15 auszuführen.

## Revendications

1. Procédé (200) pour prédire la défaillance d'un appareil émettant des bruits, le procédé comprenant les étapes suivantes :
- recevoir (202) des signaux de bruits provenant d'un appareil émettant des bruits pendant des périodes de temps consécutives, et
- pour chacune desdites périodes de temps consécutives, extraire (203) desdits signaux de bruits reçus, des sections de bruits relatives aux événements de bruits contenus dans lesdites sections de bruits et correspondant à une activité détectable dans le signal de bruits correspondant ;
- générer (205) des groupes de sections de bruits appartenant à une première période de temps en fonction d'une mesure de similarité entre lesdites sections de bruits, et attribuer (206) un horodatage de groupe de sections correspondant ;
- pour chaque période de temps subséquente, au moins reconstruire (207) lesdits groupes de sections, où les sections de bruits appartenant à ladite période de temps subséquente sont affectées en fonction de ladite mesure de similarité auxdits groupes de sections ou aux groupes de sections nouvellement générés, et affecter (208) un horodatage de groupe de sections correspondant subséquent, afin de générer des séquences de groupes de sections connectés ;
- après l'apparition d'une défaillance (211) de l'appareil émettant des bruits, attribuer (212) au moins un horodatage de défaillance à la séquence de groupes de sections connectés qui comprend au moins le groupe de sections auquel a été attribuée la dernière section de bruits avant ladite défaillance ; et
- recevoir (214) des signaux de bruits d'interrogation de l'appareil émettant des bruits ;
- extraire (215) une section de bruits d'interrogation des signaux de bruits d'interrogation et affecter (216) ladite section de bruits d'interrogation au groupe de sections d'interrogation le plus similaire des groupes de sections par rapport à ladite mesure de similarité, et
- prédire (217) un temps restant avant défaillance en fonction d'au moins une comparaison entre l'horodatage du groupe de sections correspondant dudit groupe de sections d'interrogation le plus similaire et ledit horodatage de défaillance attribué à la séquence de groupes de sections connectés à laquelle ledit groupe de sections d'interrogation le plus similaire appartient.

2. Procédé selon la revendication 1, dans lequel lesdits groupes de sections générés et reconstruits sont stockés (210) associés aux horodatages des groupes de sections correspondants et à un identifiant correspondant à la séquence de groupes de sections connectés à laquelle appartient le groupe de sections stocké.

3. Procédé selon la revendication 1 ou la revendication 2, dans lequel, après ladite occurrence d'une défaillance (211) de l'appareil émettant des bruits, un identificateur de type de défaillance identifiant un type correspondant de ladite défaillance est en outre attribué (213) à ladite séquence de groupes de sections connectés qui comprend au moins le groupe de sections ayant attribué la dernière section de bruits avant ladite défaillance.

4. Procédé selon l'une quelconque des revendications précédentes, dans lequel la réception (202) desdits signaux de bruits comprend la transformation desdits signaux de bruits dans un domaine de spectre de fréquences, et l'extraction desdites sections de bruits desdits signaux de bruits comprend l'extraction de tuiles de spectre d'une représentation tridimensionnelle de spectre de bruits desdits signaux de bruits.

5. Procédé selon la revendication 4, dans lequel l'extraction des tuiles de spectre comprend le filtrage desdites tuiles de spectre en fonction d'une ou de plusieurs autres tuiles de spectre.

6. Procédé selon l'une quelconque des revendications précédentes, dans lequel l'extraction (203) de sections de bruits comprend la génération de représentations caractéristiques réduites de données desdites sections de bruits, et ladite mesure de similarité entre lesdites sections de bruits est une mesure de similarité entre lesdites représentations caractéristiques réduites de données desdites sections de bruits.

7. Procédé selon la revendication 6, dans lequel ladite génération de représentations caractéristiques réduites de données desdites sections de bruits comprend l'exécution d'une transformée en ondelettes discrète sur lesdites sections de bruits et la sélection d'un sous-ensemble de coefficients de transformée résultants pour un traitement ultérieur.

8. Procédé selon l'une quelconque des revendications précédentes, dans lequel ladite génération (205) et ladite reconstruction (207) de groupes de sections en fonction de ladite mesure de similarité comprennent l'évaluation des coefficients d'incohérence déterminés pour lesdites sections de bruits.

9. Procédé selon l'une quelconque des revendications précédentes, dans lequel l'affectation d'une section de bruits particulière à un groupe de sections particulier comprend d'ajouter ladite section de bruits particulière audit groupe de sections particulier, si ladite mesure de similarité indique que la section de bruits particulière appartient à une quantité prédéfinie de membres de groupes les plus similaires.

10. Procédé selon l'une quelconque des revendications précédentes, dans lequel le nombre de sections de bruits affectées à un groupe de sections correspondant est stocké en association avec ledit groupe de sections correspondant.

11. Procédé selon l'une quelconque des revendications précédentes, dans lequel lesdits événements de bruits sont détectés à l'aide de données de capteurs générées par des capteurs d'événements de bruits dédiés.

12. Procédé selon l'une quelconque des revendications 1 à 10, dans lequel lesdits événements de bruits sont détectés en analysant lesdits signaux de bruits reçus.

13. Procédé selon l'une quelconque des revendications précédentes, dans lequel lesdits bruits reçus d'un appareil émettant des bruits sont des bruits reçus émis par un ascenseur.

14. Procédé tel que revendiqué dans l'une quelconque des revendications précédentes, dans lequel :
ladite réception (214) des signaux de bruits d'interrogation comprend la réception des signaux de bruits d'interrogation provenant de l'appareil émettant des bruits pendant une ou plusieurs périodes de temps d'interrogation dont les durées correspondent aux durées d'une ou de plusieurs desdites périodes de temps consécutives ;
ladite extraction (215) d'une section de bruits d'interrogation à partir des signaux de bruits d'interrogation et l'affectation (216) de ladite section de bruits d'interrogation à un groupe de sections d'interrogation les plus similaires comprennent les étapes suivantes :
pour chacune desdites une ou plusieurs périodes de temps consécutives, extraire une pluralité de sections de bruits d'interrogation depuis lesdits signaux de bruits d'interrogation et affecter chacune desdites sections de bruits d'interrogation au plus similaire desdits groupe de sections par rapport à ladite mesure de similarité ; et
ladite prédiction (217) d'un temps restant avant défaillance comprend la prédiction d'un temps restant avant défaillance, lorsqu'une ou plusieurs des séquences de groupes de sections connectés ayant des horodatages de défaillance assignés correspondent au moins partiellement à une séquence d'interrogation d'un ou plusieurs desdits groupes de sections les plus similaires, où le temps prédit avant défaillance dépend au moins d'une comparaison entre l'horodatage du groupe de sections correspondant du groupe de sections le plus récent de la séquence d'interrogation d'un ou plusieurs desdits groupes de sections les plus similaires et l'horodatage de défaillance assigné à la séquence de groupes de sections connectés à laquelle appartient le groupe de sections le plus récent.

15. Procédé tel que revendiqué dans la revendication 14, dans lequel seuls les groupes de sections d'interrogation les plus similaires clairement identifiés sont utilisés pour construire ladite séquence d'interrogation d'un ou de plusieurs desdits groupes de sections d'interrogation les plus similaires, et où un groupe de sections d'interrogation les plus similaires est considéré comme un groupe de sections d'interrogation les plus similaires clairement identifié si un nombre de sections de bruits d'interrogation supérieur à un seuil d'identification prédéfini a été attribué audit groupe de sections d'interrogation les plus similaires.

16. Système (600) permettant de prédire la défaillance d'un appareil émettant des bruits (601), le système comprenant :
un moyen de réception de bruits (602) adapté pour recevoir (202) des signaux de bruits provenant d'un appareil émettant des bruits (601) pendant des périodes de temps consécutives, et
un appareil programmable (603) comprenant au moins un dispositif de traitement (604) et une mémoire (605), adapté :
- pour chacune desdites périodes de temps consécutives, extraire (203) desdits signaux de bruits reçus des sections de bruits relativement à des événements de bruits contenus dans lesdites sections de bruits et correspondant à une activité détectable dans le signal de bruits correspondant ;
- générer (205) des groupes de sections de sections de bruits appartenant à une première période de temps en fonction d'une mesure de similarité entre lesdites sections de bruits, et attribuer (206) un horodatage de groupe de sections correspondant ;
- pour chacune desdites périodes de temps suivantes, au moins reconstruire (207) lesdits groupes de sections, où les sections de bruits appartenant à ladite période de temps subséquente sont affectées en fonction de ladite mesure de similarité auxdits groupes de sections ou aux groupes de sections nouvellement générés, et affecter (208) un horodatage de groupe de sections correspondant subséquent, afin de générer des séquences de groupes de sections connectés ;
- après l'apparition d'une défaillance (211) de l'appareil émettant des bruits, attribuer (212) au moins un horodatage de défaillance à la séquence de groupes de sections connectés qui comprend au moins le groupe de sections auquel a été attribuée la dernière section de bruits avant ladite défaillance ; et
- recevoir (214) des signaux de bruits d'interrogation de l'appareil émettant des bruits ;
- extraire (215) une section de bruits d'interrogation des signaux de bruits d'interrogation et affecter (216) ladite section de bruits d'interrogation au groupe de sections d'interrogation le plus similaire des groupes de sections par rapport à ladite mesure de similarité, et
- prédire (217) un temps restant avant défaillance en fonction d'au moins une comparaison entre l'horodatage du groupe de sections correspondant dudit groupe de sections d'interrogation le plus similaire et ledit horodatage de défaillance attribué à la séquence de groupes de sections connectés à laquelle ledit groupe de sections d'interrogation le plus similaire appartient.

17. Produit programme informatique (607) comprenant des portions de code qui, lorsqu'elles sont exécutées sur un appareil programmable (603), permettent à l'appareil programmable (603) d'exécuter un procédé selon l'une quelconque des revendications 1 à 15.
